# EUROPÄISCHE PATENTANMELDUNG

(11) **EP 1 267 357 A2**
(43) Veröffentlichungstag der Anmeldung: **18.12.2002**
(21) Anmeldenummer: 02012694.2
(22) Anmeldetag: 07.06.2002
(51) Int. Cl.: G11C 14/00, G11C 5/14

(54) **Verfahren und Anordnung mit S-RAM Speicherbereichen unterschiedlicher Zugriffsgeschwindigkeit zur Sicherstellung der Datenremanenz**

(30) Priorität: 07.06.2001 DE 10127466
(71) Anmelder: Ahrens & Birner Company GmbH, 92215 Kümmersbruck (DE); Ahrens, Wernfried, 90571 Schwaig (DE)
(72) Erfinder: Ahrens, Wernfried, Dipl.-Informatiker, 90571 Schwaig (DE)
(74) Vertreter: Dreykorn-Lindner, Werner, Dipl.-Ing.

(57) **Zusammenfassung**

2.1 Verfahren und Vorrichtungen zur Datenremanenz in Form batteriegepufferter Speicher sind bekannt.
2.2 Um auf einfache Art und Weise eine hohe Sicherheit bei der Datenremanenz zu erzielen und andererseits diese hohe Sicherheit kostengünstig zu realisieren, weist der RAM-Speicher sowohl DRAM-Speicherbereiche als auch einen batteriegepufferten SRAM-Speicherbereich mit hoher Zugriffsgeschwindigkeit auf und ist über eine Steuereinrichtung mit einem weiteren batteriegepufferten SRAM-Speicher mit niedriger Zugriffsgeschwindigkeit verbindbar, wobei die Steuereinrichtung die Aufgaben:
   - Erkennen von Unterspannung (Low-Pegel),
   - Starten des Umspeicherns der Daten vom SRAM-Speicherbereich mit hoher Zugriffsgeschwindigkeit in den SRAM-Speicher mit niedriger Zugriffsgeschwindigkeit,
   - Umschalten auf eine externe oder interne Pufferung für den SRAM-Speicher mit niedriger Zugriffsgeschwindigkeit,
   - Erkennen von Normspannung (High-Pegel),
   - Umspeichern der Daten aus dem SRAM-Speicher mit niedriger Zugriffsgeschwindigkeit in den SRAM-Speicherbereich mit hoher Zugriffsgeschwindigkeit
   übernimmt.
2.3 Die Erfindung liegt auf dem Gebiet der Telekommunikations- und Datentechnik einschließlich programmgesteuerte Haushaltsgeräte, Heizungen usw. oder dem Gebiet der Automatisierungstechnik.

## Beschreibung

Die Erfindung betrifft in erster Linie ein Verfahren zur Sicherstellung der Datenremanenz bei einem Mikroprozessorsystem mit RAM-Speicher und nicht flüchtigen Speichermedien, welche über ein oder mehrere Bussystem mit einer Peripherie und/oder einem batteriegepufferten Speicher zusammenwirken können (Oberbegriff des Patentanspruchs 1). Weiterhin betrifft die Erfindung eine Anordnung zur Durchführung des Verfahrens nach Patentanspruch 1.

Halbleiterspeicher in CMOS-Technik, welche durch eine Batterie im Falle des Ausfalls der Netzspannung mit einer Betriebsspannung versorgt werden, die für die Aufrechterhaltung der gespeicherten Daten ausreicht, sind seit langem bekannt. Beispielsweise ist aus der DE 37 09 546 C2 eine Datenverarbeitungsvorrichtung mit mindestens zwei in einem Träger miteinander verbundenen, elektronische Bauelemente tragenden Leiterplatten bekannt, von denen eine der Leiterplatten eine Batterie enthält, die bei Ausfall der von der Netzspannung gewonnenen Betriebsspannung für beide Leiterplatten, zumindest für die Aufrechterhaltung von Daten in Speichern auf den Leiterplatten bestimmte Ströme abgibt. Um zu verhindern, dass nicht nach einer Spannungsunterbrechung infolge eines Kartenziehens die Datenverarbeitungsvorrichtung mit falschen Daten weiterarbeitet, wird sowohl das Ziehen und Wiedereinstecken der die Batterie enthaltenden Karte als auch der anderen Karte bzw. Karten überwacht und erfasst. Im einzelnen ist hierzu vorgesehen, dass die batterielose Leiterplatte Stützkondensatoren enthält, an welche die Speicher der batterielosen Leiterplatte angeschlossen sind und die sich nach dem Trennen der elektrischen Verbindung zwischen der batterielosen Leiterplatte und der mit einer Batterie versehenen Leiterplatte entladen. Weiterhin ist auf einer Leiterplatte eine Schalteinrichtung vorgesehen ist, die von dem bei Herstellung der Verbindung zwischen den Leiterplatten in die Stützkondensatoren bei fehlender Betriebsspannung fließenden Ladestrom in einen bestimmten Schaltzustand versetzbar ist. Dieser Schaltzustand wird nach Wiederkehr der von der Netzspannung gewonnenen Betriebsspannung während einer Verzögerungszeit von der Datenverarbeitungsvorrichtung aufrecht erhalten und ruft an der Schalteinrichtung eine bestimmte Spannung hervor, die während der Verzögerungszeit gemessen und ausgewertet wird.

Bei einer Ausführungsform ist zwischen der Batterie und einem für die Versorgung der zweiten oder der weiteren Karten mit Pufferstrom vorgesehenen Anschluss der einen Karte ein durch eine Steuerspannung einschaltbarer erster Schalter in Reihe mit einem Widerstand angeordnet, dessen der Batterie abgewandter Pol über einen zweiten, durch die Steuerspannung ausschaltbaren Schalter an Massepotential anlegbar ist. Die Steuerspannung, die von der Netzspannungsüberwachung regeneriert wird, steuert über ein Zeitverzögerungsglied die Schalter, die nach dem Einschalten des ersten Schalters über die am Anschluss anstehende Spannung in den Selbsthaltezustand versetzbar sind. Wenn die Netzspannung vorhanden ist und das Netzgerät einwandfrei arbeitet, sind der erste Schalter geschlossen und der zweite offen. Zusätzlich erhalten beide Schalter über den Anschluss eine Spannung zur Selbsthaltung des Schaltzustands. Fällt die Netzspannung oder ein Element in der Kette der die Betriebsspannung erzeugenden Bauelemente aus, dann bleiben infolge der Selbsthaltespannung der erste Schalter geschlossen und der zweite offen. Über den ersten Schalter speist die Batterie Strom in die CMOS-SRAM Elemente der anderen Leiterplatte ein. Wird die Leiterplatte mit der Batterie aus dem Steckkartenplatz gezogen, dann werden die auf der Leiterplatte vorhandenen Speicher mit einer für die Aufrechterhaltung der Daten notwendigen Spannung versorgt, d. h. die gespeicherten Daten bleiben erhalten. Die batteriegepufferten Speicher auf der oder den anderen Leiterplatten verlieren mit dem Wegfall der Aufrechterhaltungsspannung ihre Daten. Wird die Leiterplatte mit der Batterie wieder in ihren Kartenplatz gesteckt, dann senkt der Ladestrom für die Stützkondensatoren die Spannung am Anschluss, wodurch die Selbsthaltung entfällt. Der erste Schalter öffnet sich, während der zweite Schalter schließt. Damit herrscht am Anschluss Massepotential. Bei Wiederkehr der Versorgungsspannung ändert sich an den Schaltstellungen der Schalter während des Ablaufs der Verzögerungszeit nichts. Während der Verzögerungszeit wird das am Anschluss anstehende Potential von der Datenverarbeitungsvorrichtung abgefragt. Herrscht Massepotential, dann war die Leiterplatte bei unterbrochener Betriebsspannung für die Datenverarbeitungsvorrichtung aus dem Gehäuse entfernt und wieder eingesteckt worden. Die Verarbeitung des Inhalts des Speichers, dessen Daten gestört sind, wird dann verhindert, was beispielsweise durch eine Meldung dem Bedienungspersonal angezeigt wird.

Während der Gegenstand der DE 37 09 546 C2 den Einsatzfall speicherprogrammierbare Steuergeräte oder für kommerzielle Zwecke eingesetzte Rechner treten auch auf dem Gebiet der Telekommunikationstechnik ähnliche Probleme auf. Die Betreiber von Vermittlungssystemen stellen nämlich die Forderung, dass bei Auftreten von Störungen in einem Vermittlungssystem die jeweils gerade anstehenden Aufgaben, wie z. B. die Aufrechterhaltung bestehender Verbindungen oder der Auf- bzw. Abbau von Verbindungen, weitgehend unterbrechungsfrei weitergeführt werden. Um bei Auftreten von durch Hardware bedingten Fehlern in einem Rechnersystem eine Weiterführung der Aufgaben sicherzustellen, ist es deshalb notwendig, redundante Systemteile vorzusehen.

Aus der DE 40 05 321 C2 ist beispielsweise eine Schaltungsanordnung für ein fehlertolerantes Rechnersystem, das für Echtzeitverarbeitung geeignet ist, mit zwei redundanten Rechnereinheiten bekannt. Die Rechnereinheiten weisen jeweils einen Arbeitsspeicher und einen Prozessor auf, die über einen Verbindungskanal miteinander verbunden sind. Über den Verbindungskanal tauschen die Prozessoren Zustandssignale darüber aus, welcher Prozessor der gerade betriebsführende ist und welcher als Ersatzschalteinheit bereitsteht. Die Prozessoren greifen jeweils lesend nur auf den zugehörigen Arbeitsspeicher zu und der jeweils betriebsführende Prozessor vermag Daten in die Arbeitsspeicher beider Rechnereinheiten zu schreiben. Im einzelnen weisen die Rechnereinheiten jeweils Mittel zum Erkennen von Fehlern auf. Die Arbeitsspeicher sind jeweils in einen aufwendigen ausfallsicheren Speicher, in dem die zur Abarbeitung der jeweils gerade anstehenden Aufgaben notwendigen Daten abgelegt werden und in einen weniger aufwendigen Speicher aufgeteilt, in dem alle übrigen Daten abgespeichert werden. Nur der jeweils betriebsführende Prozessor schreibt einzuschreibende Daten sowohl in den eigenen aufwendigen, ausfallsicheren Speicher als auch in den aufwendigen, ausfallsicheren Speicher der jeweils als Ersatzschalteinheit bereitstehenden Rechnereinheit ein. Ferner ist vorgesehen, dass die aufwendigen ausfallsicheren Speicher jeweils in sich gedoppelt sind und dass die Rechnereinheiten jeweils eine eigene Spannungsversorgung aufweisen. Beim Auftreten eines Fehlers in einer Rechnereinheit vermag der zugehörige Prozessor die Spannungsversorgung der zugehörigen Rechnereinheit abzuschalten. Die Prozessoren haben jeweils über eine Anschalte- und Trenneinrichtung auf einen mit den Arbeitsspeichern verbundenen Schreibbus Zugriff und die jeweilige Anschalte- und Trenneinrichtung weist bei Ausfall ihrer Versorgungsspannung an ihren mit dem Schreibbus verbundenen Ausgängen einen hochohmigen Zustand auf. Durch diese Maßnahme wird eine Veränderung von Daten der Arbeitsspeicher durch eine fehlerhafte Rechnereinheit vermieden.

Mikroprozessorsysteme sind durch einen Mikroprozessor gebildet, an dessen Mikroprozessorbus zumindest ein Anwendermodul und ein Speicher angeschlossen ist, in dem zumindest ein Anwendungsprogramm - insbesondere für die Steuerung des Anwendermoduls - gespeichert ist. Der Speicher ist durch einen programmierbaren Lesespeicher (PROM), einen elektrisch programmierbaren Lesespeicher (EPROM) oder durch einen elektrisch lösch- und programmierbaren Lesespeicher (EEPROM) realisiert. Um die Aktualisierung von gespeicherten Anwenderprogrammen und das Nachladen von Anwenderprogrammen während des Betriebs des Mikroprozessorsystems ohne Verlust der durch die Anwenderprogramme zwischengespeicherten Informationen beziehungsweise Daten zu ermöglichen, ist aus der DE 195 06 957 C2 ein Mikroprozessorsystem bekannt, bei dem der Programmspeicher durch einen nichtflüchtigen, elektrisch lösch- und programmierbaren Speicher (FLASH-EPROM-Speicher) und durch einen flüchtigen, statischen Schreib-Lesespeicher (SRAM-Speicher) realisiert. Im lösch- und programmierbaren Speicher ist das zumindest eine Anwenderprogramm, in das eine Nachladeroutine eingebunden ist, gespeichert. Bei einer Initialisierung des Mikroprozessorsystems wird mit Hilfe eines Initialisierungsprogramms das zumindest eine im lösch- und programmierbaren Speicher gespeicherte Anwenderprogramm und die Nachladeroutine in den statischen Schreib-Lesespeicher kopiert. Mit Hilfe der Nachladeroutine, die über die Systemschnittstelle aktiviert werden kann, kann ein weiteres Anwenderprogramm in den statischen Schreib-Lesespeicher geladen werden. Anschließend wird mit Hilfe der Nachladeroutine das zwischengespeicherte Anwenderprogramm im Sinne eines Neuladens oder Aktualisierens eines bereits gespeicherten Anwenderprogramms in den elektrisch lösch- und programmierbaren Schreib-Lesespeicher programmiert. Des weiteren ist im statischen Schreib-Lesespeicher ein Nachladespeicherbereich vorgesehen. Dieser Nachladespeicherbereich ist ausschließlich für die Zwischenspeicherung von in den elektrisch lösch- und programmierbaren Speicher zu programmierende Anwenderprogramme vorgesehen. In diesen Nachladespeicherbereich zwischengespeicherte Anwenderprogramme sind nicht ablauffähig.

Weiterhin ist aus der DE 295 18 676 U1 ein Koppelspeicherbauelement zum Datenaustausch von mehreren Logik- oder Prozessorsystemen, mit einer auf einem Chip integrierten Logikschaltung bekannt, die zum Anschluss der Logik- oder Prozessorsysteme mit nach außen geführten Anschlusselementen verbunden ist, und einen Speicher zur Zwischenspeicherung von Informationen beim Datenaustausch der Logik- oder Prozessorsysteme aufweist. Um ein Koppelspeicherelement zu schaffen, das unter Gewährleistung kurzer Speicherzugriffszeiten und weitgehendster Miniaturisierung einen Datenerhalt bei Betriebsspannungsausfällen sichert und kostengünstig herstellbar ist, ist im einzelnen vorgesehen, dass ein nichtflüchtiger SRAM, der im allgemeinen als non volatile SRAM oder nvSRAM bezeichnet wird, als Speicher auf dem Chip integriert ist. Ein solcher nvSRAM besteht aus einem SRAM, dem über eine Koppelschaltung ein EEPROM parallelgeschaltet ist. Dabei dient der EEPRON dem SRAM als Schattenspeicher. Innerhalb weniger Millisekunden kann der Speicherinhalt des gesamten SRAMs in den EEPROM übernommen werden. Dies kann über einen bewusst ausgelösten Befehl oder mit einem sogenannten Autostore automatisch geschehen, wenn vorbestimmte Betriebsbedingungen (z.B. Betriebsspannungsunterbrechungen) eintreten. Der Speicher kann auch als Dual Port RAM ausgeführt werden, welcher die Verbindung von zwei Logikoder Prozessorsystemen über deren Speicherinterface ermöglicht.

Schließlich ist aus der DE 197 52 969 A1 eine Vorrichtung und ein Verfahren zur Überwachung und zum Austausch eines Spannungsversorgungsbausteins eines CMOS-Bausteins bekannt. Um sicher zu stellen, dass die Informationen des CMOS-Bausteins beim Batteriewechsel nicht verloren gehen ist ein Verfahren vorgesehen, das die folgenden Schritte umfasst:
- Überwachung einer Größe, die eine Aussage über den Betrag der Spannung zulässt,
- Speichern des Inhalts des CMOS-Bausteins auf ein Speichermedium, wenn die Spannung unter einen vorbestimmten Wert absinkt,
- Wechseln der Batterie und Zurückschreiben des auf dem Speichermedium gespeicherten Inhalts des CMOS-Bausteins in den CMOS-Baustein.

Auf diese Weise wird gewährleistet, dass die im CMOS-Baustein enthaltenen Informationen nach dem Batteriewechsel wieder zur Verfügung stehen und nicht per Hand neu eingegeben werden müssen. Als Überwachungseinrichtung kann ein System Monitoring Baustein vorgesehen werden, der die Batteriespannung überwacht und den Speichervorgang initiiert, d.h. insbesondere bevorzugt ein Programm startet, das den Inhalt des CMOS-Bausteins auf ein Speichermedium schreiben kann. Als Speichermedium ist eine Standarddiskette, eine LS 120 Diskette, ein ZIP-Medium, ein Wechselplattenmedium, ein Magneto-Optisches-Medium, ein nichtflüchtiger Flash-Baustein, eine Minidisk, eine CD oder ein Netzwerk-Volumen eingesetzt. Die Einrichtung zum Zurückschreiben ist vorzugsweise das mit einem Betriebssystemkern versehene Speichermedium.

Wie die vorstehende Würdigung des Standes der Technik aufzeigt, sind Verfahren und Vorrichtungen zur Datenremanenz bekannt. Der wesentliche Nachteil der oben stehend beschriebenen batteriegepufferten Speicher liegt darin, dass um beim Auftreten von durch Hardware bedingten Fehlern in einem Rechnersystem eine Weiterführung der Aufgaben sicherzustellen, es notwendig ist, redundante Systemteile vorzusehen und den Dateninhalt ständig zu aktualisieren. Obwohl eine aufwandsarme Datenremanenz von großem Nutzen ist, konnte die Gesamtheit der Einsatzgebiete bzw. Anwendungsfälle von den bekannten Verfahren und Vorrichtungen nicht erfüllt werden. Besonders bedeutsam ist dies, weil sowohl die Computerindustrie als auch die Telekommunikations-Industrie als äußerst fortschrittliche, entwicklungsfreudige Industrie anzusehen ist, die sehr schnell Verbesserungen und Vereinfachungen aufgreift und in die Tat umsetzt.

Der Erfindung liegt gegenüber den bekannten Verfahren und Vorrichtungen zur Datenremanenz die Aufgabe zugrunde, das Verfahren und die Vorrichtung derart auszugestalten, dass einerseits eine hohe Sicherheit bei der Datenremanenz erzielbar ist, andererseits diese hohe Sicherheit kostengünstig realisiert wird.

Diese Aufgabe wird, ausgehend von einem Verfahren gemäß Oberbegriff des Patentanspruchs 1, dadurch gelöst, dass der RAM-Speicher sowohl DRAM-Speicherbereiche als auch einen batteriegepufferten SRAM-Speicherbereich mit hoher Zugriffsgeschwindigkeit aufweist und über eine Steuereinrichtung mit einem weiteren batteriegepufferten SRAM-Speicher mit niedriger Zugriffsgeschwindigkeit verbindbar ist, wobei die Steuereinrichtung die Aufgaben:
- Erkennen von Unterspannung (Low-Pegel),
- Starten des Umspeicherns der Daten vom SRAM-Speicherbereich mit hoher Zugriffsgeschwindigkeit in den SRAM-Speicher mit niedriger Zugriffsgeschwindigkeit,
- Umschalten auf eine externe oder interne Pufferung für den SRAM-Speicher mit niedriger Zugriffsgeschwindigkeit,
- Erkennen von Normspannung (High-Pegel),
- Umspeichern der Daten aus dem SRAM-Speicher mit niedriger Zugriffsgeschwindigkeit in den SRAM-Speicherbereich mit hoher Zugriffsgeschwindigkeit
übernimmt.

Das erfindungsgemäße Verfahren weist den Vorteil auf, dass auf überraschend einfache Art und Weise eine hohe Sicherheit der Datenremanenz erreicht werden kann. Im Störungsfall werden nämlich die Daten vom SRAM-Speicherbereich mit hoher Zugriffsgeschwindigkeit in den SRAM-Speicher mit niedriger Zugriffsgeschwindigkeit umgespeichert, wobei sich dieser durch eine geringe Verlustleistung auszeichnet, so dass die Möglichkeit zur Langzeit-Pufferung besteht.

Weiterhin wird diese Aufgabe, ausgehend von einer Anordnung gemäß Oberbegriff des Patentanspruchs 6, dadurch gelöst, dass der RAM-Speicher sowohl DRAM-Speicherbereiche als auch einen batteriegepufferten SRAM-Speicherbereich mit hoher Zugriffsgeschwindigkeit aufweist, dass eine Steuervorrichtung und ein weiterer batteriegepufferter SRAM-Speicher mit niedriger Zugriffsgeschwindigkeit vorgesehen sind und dass die Steuereinrichtung sowohl mit den beiden Speichern als auch mit der Pufferung verbunden ist und sowohl den Datentransfer zwischen den beiden Speichern als auch deren Stromversorgung steuert.

Die erfindungsgemäße Anordnung weist den Vorteil auf, dass trotz der hohen Sicherheit der Datenremanenz, der zusätzliche Aufwand für den SRAM-Speicher mit niedriger Zugriffsgeschwindigkeit und die Steuereinrichtung verhältnismäßig gering ist, wobei dieser durch den sonst erforderlichen Aufwand für ein redundantes Ausgestalten der Systemteile mehr als kompensiert wird.

Vorzugsweise führt die Steuereinrichtung, gemäß Patentanspruch 2, nachdem die Daten vollständig vom SRAM-Speicherbereich mit hoher Zugriffsgeschwindigkeit in den SRAM-Speicher mit niedriger Zugriffsgeschwindigkeit transferiert wurden, eine Fehlererkennung durch und wiederholt je nach Ergebnis das Umspeichern aller Daten.

Durch das Durchführen einer Fehlererkennung und gegebenenfalls Wiederholung des kompletten Umspeichervorgangs oder Teilen davon, wird sichergestellt, dass der Systemzustand identisch abgebildet wird, so dass nach Beheben der Störung der frühere Systemzustand zuverlässig wieder hergestellt werden kann.

In Weiterbildung der Erfindung wird, gemäß Patentanspruch 3, zur Fehlererkennung das CRC-Verfahren benutzt und beim wiederholten Überschreiten einer vorgebbaren Fehlerrate, wird der gesamte Dateninhalt des SRAM-Speicher mit niedriger Zugriffsgeschwindigkeit für ungültig erklärt.

Diese Weiterbildung der Erfindung weist den Vorteil auf, dass das zyklische Blocksicherungsverfahren auf eine Realisierung in einem Mikroprozessorsystem abgestimmt und häufig bereits implementiert ist, so dass die Daten ohne zusätzlichem Aufwand hinsichtlich ihrer korrekten Programmierung/Abspeicherung überprüft werden können.

Vorzugsweise schaltet die Steuereinrichtung, gemäß Patentanspruch 4, nach korrektem Umspeichern der Daten vom SRAM-Speicherbereich mit hoher Zugriffsgeschwindigkeit in den SRAM-Speicher mit niedriger Zugriffsgeschwindigkeit, die Batteriepufferung für den SRAM-Speicherbereich mit hoher Zugriffsgeschwindigkeit ab.

Die Schaltfunktion als solche kann einerseits kostengünstig realisiert werden, da nur niedrige Spannungen und Ströme zu schalten sind. Andererseits muss der SRAM-Speicherbereich mit hoher Zugriffsgeschwindigkeit, welcher sich durch eine hohe Verlustleistung auszeichnet, nur übergangsweise gepuffert werden.

Bei einer bevorzugten Ausgestaltung der Erfindung führt die Steuereinrichtung, gemäß Patentanspruch 5, das Umspeichern der Daten aus dem SRAM-Speicher mit niedriger Zugriffsgeschwindigkeit in den SRAM-Speicherbereich mit hoher Zugriffsgeschwindigkeit durch, bevor der Boot-Vorgang gestartet wird.

Diese Ausgestaltung der Erfindung weist den Vorteil auf, dass keine Abarbeitung von Fehlermeldungen beim Hochfahren erforderlich ist, da alle Informationen erhalten geblieben sind und somit das Hochfahren wie bei normaler Programmbeendigung ablaufen kann.

In Weiterbildung der Erfindung ist, gemäß Patentanspruch 7, zur Pufferung entweder eine Batterie oder ein Akkumulator vorgesehen und mit der Steuereinrichtung sind Mittel zum Umschalten auf eine interne oder externe Pufferung verbunden.

Diese Weiterbildung der Erfindung weist den Vorteil auf, dass je nach Anwendung und Anforderung, auch hinsichtlich Langzeitspeicherung, der eine oder beide SRAM-Speicherbereiche mit Strom versorgt werden. Auch kann benutzergesteuert das Kopieren der Speicherbereiche vor der WiederInbetriebnahme durchgeführt werden oder die interne Batterie ausgetauscht werden, ohne dass der Speicherinhalt verloren geht.

Schließlich ist bevorzugt die Anordnung als Modul ausgestaltet oder zusammen mit dem Mikroprozessorsystem auf einem Chip integriert.

Diese Ausgestaltung der Erfindung weist den Vorteil auf, dass durch die Modul-Bauweise die Möglichkeit zur Nachrüstung besteht. Bei einer Integration auf einem Chip können Anforderungen hinsichtlich Höchstintegration erfüllt werden, zudem kann die Pufferung mehrfach benutzt werden.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
FIG. 1 das Blockschaltbild einer Ausführungsform der erfindungsgemäßen Anordnung und
FIG. 2a und 2b die Struktur eines Mikroprozessorsystems nach dem Stand der Technik.

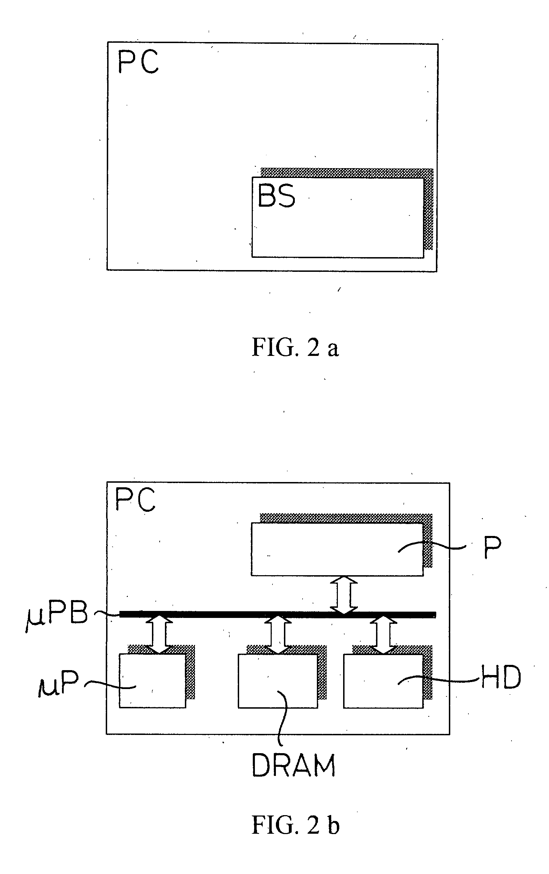

Die in den FIG. 2a und 2b dargestellte Struktur eines Mikroprozessorsystems nach dem Stand der Technik zeigt eine PC-basierende Hardwareplattform. Solche Hardwareplattformen werden in der Automatisierungstechnik z.Zt. in unkritischen und nicht zeitrelevanten Umgebungen eingesetzt. Die Steuerungssoftware basiert in den meisten Fällen auf den bekannten Office/Server - Betriebssystemen WinNT und Win2000. In der Office - Embedded Welt kommt WinCE, Embedded NT und RTLinux zum Einsatz.

Die im Office - Bereich sehr beliebte PC-Architektur (wie diese in FIG. 2a mit PC Hardware PC und Office Betriebssystem BS dargestellt ist), findet im Automatisierungsbereich und hier speziell im produzierenden Gewerbe kaum Beachtung. Die wesentlichen Gründe hierfür sind:
- Steuerungen im industriellen Charakter zeichnen sich durch eine hohe Verfügbarkeit aus, ähnlich großen Serversystemen im Office-Bereich.
- Eine hohe Verfügbarkeit wird unter anderem durch die Ausfallsicherheit der Hard- u. Softwarekomponenten und hier insbesondere durch das remanente Speichern von dynamischen Daten erreicht.
- Das Speichern von remanenten Daten über einen großen Zeitraum (1 Jahr und mehr) ist nicht gegeben.
- Zykluszeiten im klassischen SPS-Bereich von einstelligen Millisekunden sind nicht zu erreichen.

FIG. 2b zeigt die PC-Hardware PC, welche derart strukturiert, dass das Mikroprozessorsystem µP mit der Peripherie P, RAM-Speicher DRAM und nicht flüchtigen Speichermedien HD über ein oder mehrere Bussysteme µPB zusammen wirken.

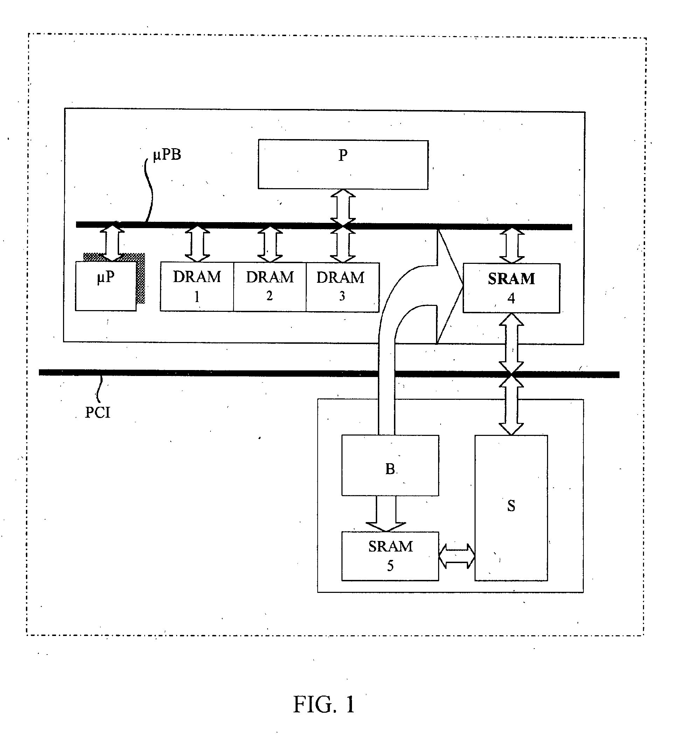

Die FIG. 1 zeigt eine bevorzugte Ausführungsform der erfindungsgemäßen Anordnung im Blockschaltbild. Prinzipiell ist das erfindungsgemäße Konzept für viele Anwendungsfälle geeignet, wobei das Einsatzgebiet von der Datenund Telekommunikationstechnik bis hin zu programmgesteuerten Haushaltsgeräten, Heizungen usw. oder dem Gebiet der Automatisierungstechnik reicht.

Erfindungsgemäß weist der RAM-Speicher sowohl DRAM-Speicherbereiche DRAM 1, ... DRAM 3 als auch einen batteriegepufferten SRAM-Speicherbereich mit hoher Zugriffsgeschwindigkeit SRAM 4 auf. Mittels einer Steuereinrichtung S ist der batteriegepufferte SRAM-Speicherbereich mit hoher Zugriffsgeschwindigkeit SRAM 4 mit einem weiteren batteriegepufferten SRAM-Speicher mit niedriger Zugriffsgeschwindigkeit SRAM 5 verbindbar. Die Steuereinrichtung S übernimmt die folgenden Aufgaben:
- Erkennen von Unterspannung (Low-Pegel),
- Starten des Umspeicherns der Daten vom SRAM-Speicherbereich mit hoher Zugriffsgeschwindigkeit SRAM 4 in den SRAM-Speicher mit niedriger Zugriffsgeschwindigkeit SRAM 5,
- Umschalten auf eine externe oder interne Pufferung (B) für den SRAM-Speicher mit niedriger Zugriffsgeschwindigkeit SRAM 5,
- Erkennen von Normspannung (High-Pegel),
- Umspeichern der Daten aus dem SRAM-Speicher mit niedriger Zugriffsgeschwindigkeit SRAM 5 in den SRAM-Speicherbereich mit hoher Zugriffsgeschwindigkeit SRAM 4.

Nachdem die Daten vollständig vom SRAM-Speicherbereich mit hoher Zugriffsgeschwindigkeit SRAM 4 in den SRAM-Speicher mit niedriger Zugriffsgeschwindigkeit SRAM 5 transferiert wurden, führt die Steuereinrichtung S eine Fehlererkennung durch und wiederholt je nach Ergebnis das Umspeichern aller Daten. Vorzugsweise wird zur Fehlererkennung das CRC-Verfahren benutzt wird und beim wiederholten Überschreiten einer vorgebbaren Fehlerrate, wird der gesamte Dateninhalt des SRAM-Speicher mit niedriger Zugriffsgeschwindigkeit SRAM 5 für ungültig erklärt. Die Steuereinrichtung S kann nach korrektem Umspeichern der Daten vom SRAM-Speicherbereich mit hoher Zugriffsgeschwindigkeit SRAM 4 in den SRAM-Speicher mit niedriger Zugriffsgeschwindigkeit SRAM 5, die Batteriepufferung B für den SRAM-Speicherbereich mit hoher Zugriffsgeschwindigkeit SRAM 4 abschalten. Weiterhin kann die Steuereinrichtung S das Umspeichern der Daten aus dem SRAM-Speicher mit niedriger Zugriffsgeschwindigkeit SRAM 5 in den SRAM-Speicherbereich mit hoher Zugriffsgeschwindigkeit SRAM 4 durchführen, bevor der Boot-Vorgang gestartet wird.

Zur Pufferung B ist entweder eine Batterie oder ein Akkumulator vorgesehen, wobei mit der Steuereinrichtung S Mittel zum Umschalten auf eine interne oder externe Pufferung B verbunden sind. Im Gegensatz zu einer Soft-SPS Lösung, kann beim erfindungsgemäßen Verfahren eine Software eingesetzt werden, welche auf einem 32-Bit Echtzeitbetriebsystem basiert, und welche auch die Grundlage für das komplette SPS-Betriebssystem bildet. Diese Software nutzt die kompletten Ressourcen einer PC-Hardware. Andere Office-Betriebsysteme können in der Regel nicht parallel gefahren werden.

Die Taskstruktur der programmtechnischen Lösung ist horizontal prioritätsgesteuert. Demzufolge wird Multi- und Paralleltasking (nicht zeitgesteuert; vielmehr laufen Tasks mit dem gleichen Programmcode und der gleichen Priorität in einem anderen Stackbereich quasi parallel) durch den Echtzeitkern unterstützt (Parallel Computing).

Im Gegensatz zu den bekannten Speicher-Programmierbaren-Steuerungen (SPSen), stellt die programmtechnische Lösung bis zu zehn dieser parallelen Abarbeitungszyklen für den SPS-Bereich bereit. Der Programmierer kann seine Aufgabenstellung parallelisieren. Weiterhin sind mehrere Kommunikationsschnittstellen (Dual Port zum S5-Interface, PCI-Bus, Ethernet, seriell) vorgesehen, d.h. der logische Austausch von Daten über Bussysteme hinweg ist gewährleistet.

Im Vergleich zum bekannten Stand der Technik erfordert die erfindungsgemäße Anordnung keine redundante Ausführung von Systemteilen. Im Störungsfall erlaubt das erfindungsgemäße Verfahren die ordnungsgemäße Beendigung des Betriebs und ein korrektes Hochfahren mit überraschend geringem Aufwand. Von besonderer Bedeutung sind zudem die vielfältigen Einsatzmöglichkeiten, einschließlich der Möglichkeit zum Nachrüsten in bestehende Systeme sowie die flexible und kostengünstige Ausgestaltung, beispielsweise von Automatisierungslösungen.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise können die Störungsmeldungen über jeden Internet Browser abgerufen werden; in das Modul kann ein E-Mail Client integriert werden, damit das System ereignisgesteuert Mails verschicken und das Instandhaltungspersonal somit rechtzeitig, z.B. über Störungen, informiert werden kann u.a.

## Patentansprüche

1. Verfahren zur Sicherstellung der Datenremanenz bei einem Mikroprozessorsystem (µP) mit RAM-Speicher (DRAM) und nicht flüchtigen Speichermedien (HD), welche über ein oder mehrere Bussystem (µPB, PCI) mit einer Peripherie (P) und/oder einem batteriegepufferten Speicher zusammenwirken können, **dadurch gekennzeichnet, dass** der RAM-Speicher sowohl DRAM-Speicherbereiche (DRAM 1, ... DRAM 3) als auch einen batteriegepufferten SRAM-Speicherbereich mit hoher Zugriffsgeschwindigkeit (SRAM 4) aufweist und über eine Steuereinrichtung (S) mit einem weiteren batteriegepufferten SRAM-Speicher mit niedriger Zugriffsgeschwindigkeit (SRAM 5) verbindbar ist, wobei die Steuereinrichtung (S) die Aufgaben:
• Erkennen von Unterspannung (Low-Pegel),
• Starten des Umspeicherns der Daten vom SRAM-Speicherbereich mit hoher Zugriffsgeschwindigkeit (SRAM 4) in den SRAM-Speicher mit niedriger Zugriffsgeschwindigkeit (SRAM 5),
• Umschalten auf eine externe oder interne Pufferung (B) für den SRAM-Speicher mit niedriger Zugriffsgeschwindigkeit (SRAM 5),
• Erkennen von Normspannung (High-Pegel),
• Umspeichern der Daten aus dem SRAM-Speicher mit niedriger Zugriffsgeschwindigkeit (SRAM 5) in den SRAM-Speicherbereich mit hoher Zugriffsgeschwindigkeit (SRAM 4).
übernimmt.

2. Verfahren nach Anspruch 1, **dadurch gekennzeichnet, dass** nachdem die Daten vollständig vom SRAM-Speicherbereich mit hoher Zugriffsgeschwindigkeit (SRAM 4) in den SRAM-Speicher mit niedriger Zugriffsgeschwindigkeit (SRAM 5) transferiert wurden, die Steuereinrichtung (S) eine Fehlererkennung durchführt und dass die Steuereinrichtung (S) je nach Ergebnis das Umspeichern aller Daten wiederholt.

3. Verfahren nach Anspruch 2, **dadurch gekennzeichnet, dass** zur Fehlererkennung das CRC-Verfahren benutzt wird und dass beim wiederholten Überschreiten einer vorgebbaren Fehlerrate, der gesamte Dateninhalt des SRAM-Speicher mit niedriger Zugriffsgeschwindigkeit (SRAM 5) für ungültig erklärt wird.

4. Verfahren nach Anspruch 1, **dadurch gekennzeichnet, dass** die Steuereinrichtung (S) nach korrektem Umspeichern der Daten vom SRAM-Speicherbereich mit hoher Zugriffsgeschwindigkeit (SRAM 4) in den SRAM-Speicher mit niedriger Zugriffsgeschwindigkeit (SRAM 5), die Batteriepufferung (B) für den SRAM-Speicherbereich mit hoher Zugriffsgeschwindigkeit (SRAM 4) abschaltet.

5. Verfahren nach Anspruch 1, **dadurch gekennzeichnet, dass** die Steuereinrichtung (S) das Umspeichern der Daten aus dem SRAM-Speicher mit niedriger Zugriffsgeschwindigkeit (SRAM 5) in den SRAM-Speicherbereich mit hoher Zugriffsgeschwindigkeit (SRAM 4) durchführt, bevor der Boot-Vorgang gestartet wird.

6. Anordnung zur Sicherstellung der Datenremanenz bei einem Mikroprozessorsystem (µP) mit RAM-Speicher (DRAM) und nicht flüchtigen Speichermedien (HD), welche über ein oder mehrere Bussystem (µPB, PCI) mit einer Peripherie (P) und/oder einem batteriegepufferten Speicher zusammenwirken können, **dadurch gekennzeichnet, dass** der RAM-Speicher sowohl DRAM-Speicherbereiche (DRAM 1, ... DRAM 3) als auch einen batteriegepufferten SRAM-Speicherbereich mit hoher Zugriffsgeschwindigkeit (SRAM 4) aufweist, dass eine Steuervorrichtung (S) und ein weiterer batteriegepufferter SRAM-Speicher mit niedriger Zugriffsgeschwindigkeit (SRAM 5) vorgesehen sind und dass die Steuereinrichtung (S) sowohl mit den beiden Speichern (SRAM 4, SRAM 5) als auch mit der Pufferung (B) verbunden ist und sowohl den Datentransfer zwischen den beiden Speichern (SRAM 4, SRAM 5) als auch deren Stromversorgung steuert.

7. Anordnung nach Anspruch 6, **dadurch gekennzeichnet, dass** zur Pufferung (B) entweder eine Batterie oder ein Akkumulator vorgesehen ist und dass mit der Steuereinrichtung (S) Mittel zum Umschalten auf eine interne oder externe Pufferung (B) verbunden sind.

8. Anordnung nach Anspruch 6, **gekennzeichnet durch** die Ausgestaltung der Anordnung als Modul oder **durch** die Integration der Anordnung zusammen mit dem Mikroprozessorsystem auf einem Chip.
